# EUROPÄISCHE PATENTANMELDUNG

(11) **EP 4 592 136 A1**
(43) Veröffentlichungstag der Anmeldung: **30.07.2025**
(21) Anmeldenummer: 24000148.7
(22) Anmeldetag: 19.12.2024
(51) Int. Cl.: B60M 1/28, H02G 1/04, B66F 11/04

(54) **HEBEVORRICHTUNG ZUR BEQUEMEN DURCHFÜHRUNG VON EINGRIFFEN AN EISENBAHN-OBERLEITUNGEN**

(30) Priorität: 23.01.2024 IT 202400001164
(71) Anmelder: Volta Macchine Srl, 39100 Bolzano (IT)
(72) Erfinder: Canestrari, Samuele, I-39055 LAIVES (BZ) (IT)
(74) Vertreter: Oberosler, Ludwig

(57) **Zusammenfassung**

Hebevorrichtung für die Durchführung non Eingriffen an Eisenbahnoberleitungen bestehend aus einer Auflageplatte (1) mit vertikalem festen Trägerelement (1d) welche an einer Stützstrebe (A, A1) der Trägerstruktur einer Eisenbahnoberleitung oder an einem horizontalen rohrförmigen Träger an der festen oder anhebbaren Arbeitsplattform eines Eisenbahnbaufahrzeuges befestigbar ist, wobei am besagten festen Trägerelement (1d) ein vertikal verschiebbares (1v) Trägerelement (1e) geführt ist welches am oberen Ende ein horizontales Trägerelement (2) trägt, von dessen Enden zwei horizontale Auflagearme (2a) im rechten Winkel abstehen, wobei das besagte verschiebbare Trägerelement (1e) händisch mittels Gewindestangen- oder Zahnrad mit Zahnstange oder mittels elektrischem oder hydraulischem linearem Stellmechanismus (2m) bewegbar ist und wobei an jedem der genannten Auflagearme (2a) ein längsverschiebbares (2h) gleitendes, durch Gewindestange (2i) mit Handrad (2g) oder Einstelldrehgriff betätigbares, Auflageelement (2b) gelagert ist.

## Beschreibung

Die Erfindung bezieht sich auf eine Hebevorrichtung welche von Hand, elektrisch, mittels linearem Stellantrieb oder hydraulisch betätigbar ist und, zwecks bequemer Durchführung von Installations-, Montage- und/oder Instandhaltungseingriffen, direkt an den Stützstreben der Eisenbahnoberleitungen anbringbar ist.

Die Eisenbahnoberleitungen welche, außerhalb der Tunnels, der Schutzstrukturen oder der Unterführungen, aus blanken in der Luft gespannten Leitern bestehen, sind meist von vertikalen Masten, an welchen horizontale Stützstreben angebracht sind, oder von einer Portikusstrukrur welche ein oder mehrere Geleise überspannt, getragen. Die leitenden Fahrdrähte der Eisenbahnoberleitungen sind größtteils in Form einer Kettenlinie, mittels vertikaler Hängedrähte, an einem einfachen oder doppelten, längsverlaufenden Tragseil, in relativ kurzen Abständen aufgehängt um praktisch in einer, zur Ebene der Geleise, parallelen Ebene zu verlaufen. Die Oberleitungsaufhängung kann an einem einzigen Tragseil oder an zwei parallel, nebeneinander verlaufenden Tragseilen erfolgen. Das oder die Tragseile verlaufen gemäß einer gebrochenen Linie, ähnlich einer Kettenlinie welche ihrerseits, durch die Zwischenanordnung von Isolatoren, von den Trägerstrukturen, insbesondere Masten, Stützstreben, Portale, getragen wird. Die Isolatoren sind fest an den horizontalen Stützstreben angebracht und können, bezogen auf die Art der Eisenbahnlinie, z.B. für niedrige oder hohe Geschwindigkeit und/oder bezogen auf die technischen Merkmale der Stützorgane, unterschiedliche Höhe und Form aufweisen.

Es ist die Anwendung hydraulischer Hebevorrichtungen bekannt welche permanent an den Hebebühnen der Eisenbahnbaufahrzeuge angebracht sind welche, zwecks Durchführung von Montage-, Überprüfungs- und Instandhaltungsarbeiten an den Eisenbahnoberleitungen eingesetzt werden. Diese besagten hydraulischen Hebevorrichtungen sind nicht an allen Arten von Eisenbahnbaufahrzeugen vorgesehen weil diese entweder nicht für deren Montage vorgesehen sind oder weil es zu aufwändig ist alle Hebebühnen mit hydraulischen Hebevorrichtungen auszustatten.

Aus der FR 3089165 A1 ist eine Hebevorrichtung an einem, längs der Bahngeleise verfahrbaren, Eisenbahnbaufahrzeug bekannt, welche nicht direkt an einem Element oder an einem horizontalen Rohrprofil der Trägerstruktur der Oberleitung montierbar ist. Die besagte Vorrichtung besteht aus einem vertikal bewegbaren Trägerarm um die kettenlinienartig verlaufende Aufhängung zusammen mit der Oberleitung anheben/absenken zu können. An den einzelnen Auflageelementen der besagten Hebevorrichtung sind keine, quer zum Verlauf der Oberleitung, beweglichen Elemente vorgesehen. Eine gewisse Anpassung des gesamten vertikal bewegbaren Trägerarms quer zur Oberleitung, ist durch dessen Schwenkung mittels Hydraulikzylinder um eine, zur Bahnlinie parallelen, Achse möglich. Diese Vorrichtung ist nicht für den Austausch kleinerer Teile der Oberleitung oder für Eingriffe an dieser geeignet.

Aus der AU2010100896 A4 ist eine Hebevorrichtung, ähnlich der in der vorgenannten FR 3089165 A1 beschriebenen Vorrichtung, bekannt welche an einem, längs der Geleise verfahrbaren, Fahrzeug aufgebaut ist, welches mit einem vertikal bewegbaren und quer zur Oberleitung schwenkbaren Trägerarm ausgestattet ist.

Die WO 96/13885 beschreibt eine an einem Straßenfahrzeug aufgebauten Vorrichtung für Eingriffe an elektrischen Freileitungen mit mehreren Leitern, z.B Dreiphasenleitungen. Die Vorrichtung besteht aus einem schwenkbaren Teleskoparm welcher am freien Ende ein Auflageelement trägt welches an den Abstand zwischen den Leitern anpassbar ist.

Die DE 202022105080 U1 beschreibt eine Vorrichtung für den Austausch von Isolatoren an Starkstromfreileitungen. Diese Vorrichtung kann an den beiden extremen Befestigungspunkten des Isolators befestigt werden, ohne dabei an der Trägerstruktur der Leitung oder an einem rohrförmigen horizontalen Trägerteil dieser, befestigt zu werden.

Die CN 220281175 U beschreibt eine in der Länge verstellbare Stange welche parallel zu einem auszutauschenden Isolator befestigt werden kann, es sind keine horizontalen Stützstreben für die Montage dieser Stange oder vertikal bewegbare Auflagen für den Austausch des Isolators angeführt.

Die Erfindung stellt sich die Aufgabe eine Hebevorrichtung zur bequemen Durchführung von Eingriffen an Eisenbahnoberleitungen zu schaffen welche zum Abheben der Tragseile der Oberleitungen aus dem Halterungselement am oberen Ende der Isolatoren welche an den, von den vertikalen Masten abstehenden Stützstreben, befestigt sind, geeignet ist, wobei die Vorrichtung direkt an den besagten horizontalen Stützstreben mit unterschiedlichem Querschnitt oder an den Hebebühnen der bekannten Eisenbahnbaufahrzeuge montiert werden kann, wodurch eine Reduzierung der Kosten für die Ausstattung der Einsatzteams und eine Vereinfachung ihrer Verwendung, ohne Beachtung der komplexen Funktionslogiken auf den im Einsatz befindlichen Eisenbahnbaufahrzeugen, ermöglicht wird.

Die besagte erfindungsgemäße Hebevorrichtung besteht wesentlich aus einer horizontalen Auflageplatte welche auf den Stützstreben der Trägerstruktur der Eisenbahnoberleitungen, bzw. auf einer Auflage an den Hebebühnen der bekannten Eisenbahnbaufahrzeugen, angebracht werden kann; welche an der Unterseite mit einem Befestigungsbügel versehen ist welcher mittels Gewindespannbolzen und Drehgriffe befestigt ist, während an der Oberseite ein vertikales Trägerelement vorgesehen ist an welchem ein vertikal, händisch oder durch elektrischem oder hydraulischem Stellantrieb verschiebbares, Trägerelement geführt ist. Am oberen Ende des besagten verschiebbaren Trägerelements ist ein horizzontales Trägerelement befestigt oder in einer oder mehreren, vertikal unter sich distanzierten, Positionen ansteckbar, welches an seinen Enden mit zueinander parallelen, horizontal im rechten Winkel abstehenden, Auflagearmen versehen ist. Die besagten Auflagearme können, während der Montage-, Austausch- oder Instandhaltungseingriffe an einer Oberleitung, beidseitig der Isolatoren, direkt unterhalb der Tragseile der Oberleitung, wirken um diese, infolge vorheriger Abmontage der betreffenden Halteklemmen, vom Auflageelement am oberen Ende der Isolatoren welche vertikal von den Stützstreben abstehen, abzuheben.

Oberhalb an jedem der genannten Arme kann ein gleitendes Auflageelement vorgesehen sein welches, längs des entsprechenden Arms, mittels mit Drehgriff oder Drehrad versehener Gewindestange, bewegt werden kann.

Oberhalb an den besagten gleitenden Auflageelementen können, unter sich distanzierte, Aufnahmekerben für die abzuhebenden Tragseile vorgesehen sein. Um die besagten Tragseile in den entsprechenden Kerben zu sichern können, am gleitenden Auflageelement schwenkbar oder verschiebbare gelagerte, Rückhalteelemente vorgesehen sein, wobei diese mit einem

Einklinkelement, zwecks Sicherung der Rückhaltestellung, versehen sein können.

Das Abheben der Tragseile von den Auflageelementen der Isolatoren erfolgt durch manuelles Betätigen, z.B. mittels Gewindestange oder eines Zahnrads mit Zahnstange, bzw mittels elektrischer oder hydraulischer Stellantriebe welche zwischen dem, an der Auflageplatte der Vorrichtung befestigten, vertikalen Trägerelement und dem vertikal gleitend an diesem gelagerten, Trägerelement wirkt. Die gleitend, an den horizontalen Auflagearmen, gelagerten Auflageelemente ermöglichen das genaue und korrekte Einlagern der Tragseile in die Kerben um von den Auflageelementen abgehoben, bzw. an diesen wieder aufgelegt zu werden, mit der Möglichkeit einer horizzontalen Verschiebung in Querrichtung.

Zwecks Stabilisierung der Montageposition der erfindungsgemäßen Hebevorrichtung im Fall von Eingriffen an Isolatoren welche an Oberleitungen in Kurvenabschnitten der Bahnlinie vorgesehen sind, wo an den Tragseilen horizontale Kräfte in Querrichtung wirken, ist am oberen Ende des feststehenden vertikalen Trägerelements, welches von der Auflageplatte der Hebevorrichtung absteht, ein Zuganker aus flexiblem Werkstoff oder eine starre Stütze anbringbar, deren Ende, beabstandet zur Auflageoplatte, an der selben Stützstrebe welche den Isolator trägt, bzw. an welcher die Auflageplatte der Hebevorrichtung angebracht ist, befestigt werden kann. Vorteilhafterweise ist der besagte Zuganker oder die starre Stütze mit einer Spannvorrichtung, zwecks Anpassung der Länge und/oder Ausübung einer Kraft gegen die horizontal an den Tragseilen, bzw, Isolatoren, wirkende Kraft, z.B. im Fall eines Kurvenabschnittes der Bahnlinie, versehen.

Die erfindungsgemäße Hebevorrichtung kann bequem an den Stützstreben der Oberleitung, welche unterschiedlichen Querschnitt aufweisen können, oder an Auflagen welche an den Hebebühnen der bekannten Eisenbahnbaufahrzeuge zwecks Durchführung von Arbeiten an den Oberleitungen vorgesehen sind, montiert werden. Sie ist für Isolatoren unterschiedlicher Höhe und/oder unterschiedlicher Form, an geradlinigen Bahnstrecken oder an Kurvenabschnitten, einsetzbar, ermöglicht weiters das Verschieben der Tragseile auch in Querrichtung zu deren Verlauf wobei, sei es für die Hebe-/Absenkbewegung als auch für die horizontale Querverschiebung der Tragseile die höchste Sicherheit gewährleistet ist.

Die Erfindung wird, anhand eines vorzuziehenden Ausführungsbeispiels einer, in den beigelegten Zeichnungen schematisch dargestellten, erfindungsgemäßen Hebevorrichtung näher erklärt, dabei erfüllen die Zeichnungen rein erklärenden, nicht beschränkenden, Zweck.

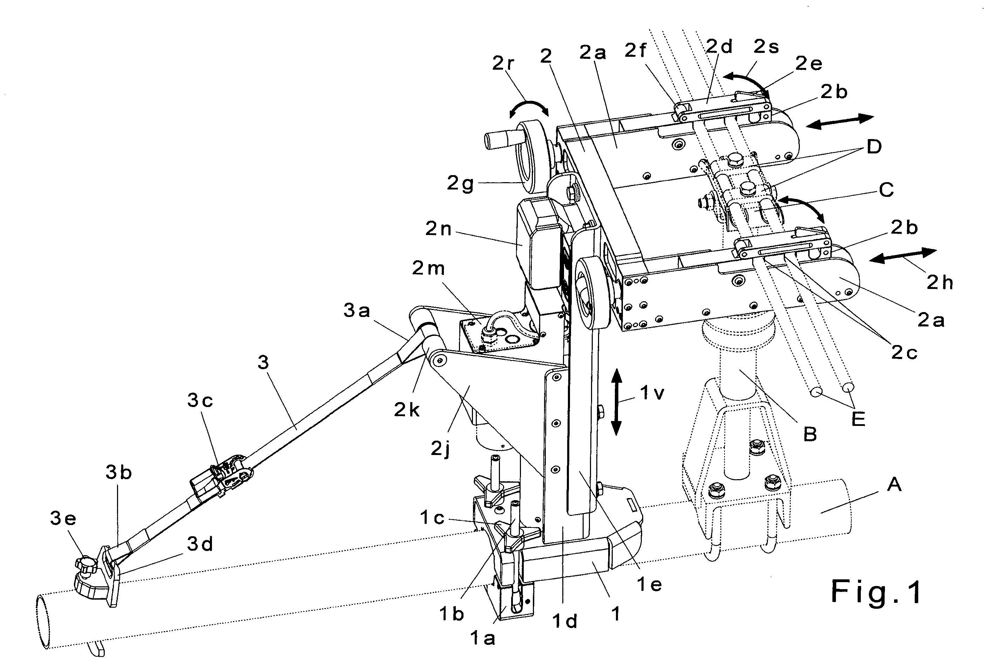

Die Fig. 1 zeigt in perspektivischer Darstellung eine erfindungsgemäße Hebevorrichtung welche an einer Stützstrebe mit rohrförmigem rundem Querschnitt mit einem Isolator für eine Bahnoberleitung einer Eisenbahnlinie für niedrige Geschwindigkeit, mit zwei nebeneinander angeordneten, am oberen Ende des Isolators befestigten, Tragseilen angebracht ist, wobei die Hebevorrichtung mittels einem Zuganker mit Spannvorrichtung welcher an der selben Stützstrebe befestigt ist, gegen Umkippen stabilisiert ist und die Tragseile in entsprechenden Kerben an den, längs der Auflagearme der Vorrichtung, gleitenden Elemente gesichert sind.

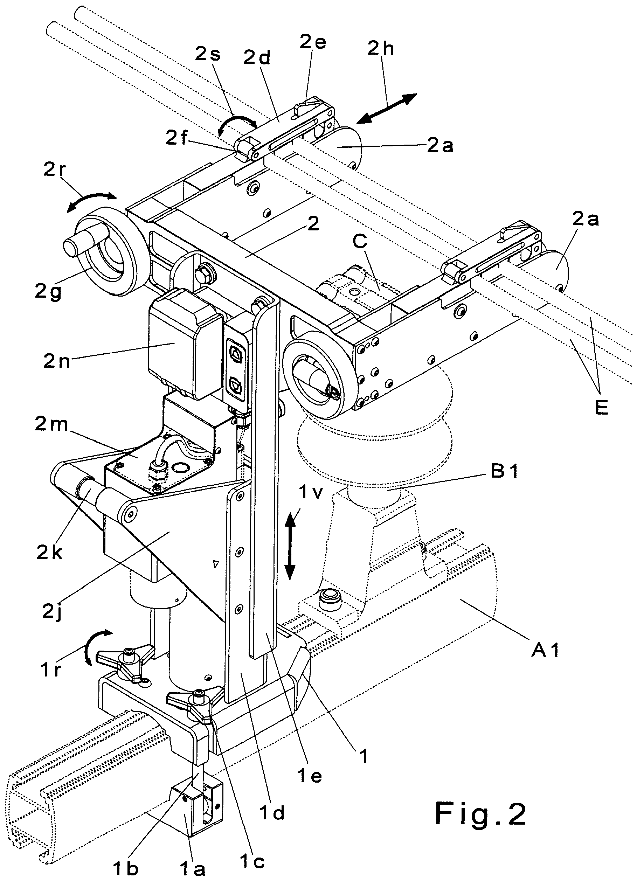

Die Fig. 2 zeigt die selbe, in Fig. 1 dargestellte, Vorrichtung welche ohne Zuganker an einer Stützstrebe mit profiliertem Rohrquerschnitt, mit einem Isolator für eine Oberleitung einer Bahnlinie für hohe Geschwindigkeit, mit den zwei nebeneinander angeordneten Tragseilen angebracht ist, wobei diese in entsprechenden Kerben an den, längs der Auflagearme der Vorrichtung, verschiebbaren Elemente gesichert sind, und die besagten Tragseile sich in, von den entsprechenden Halterungselemente am oberen Ende des Isolators, anbehobener Position befinden.

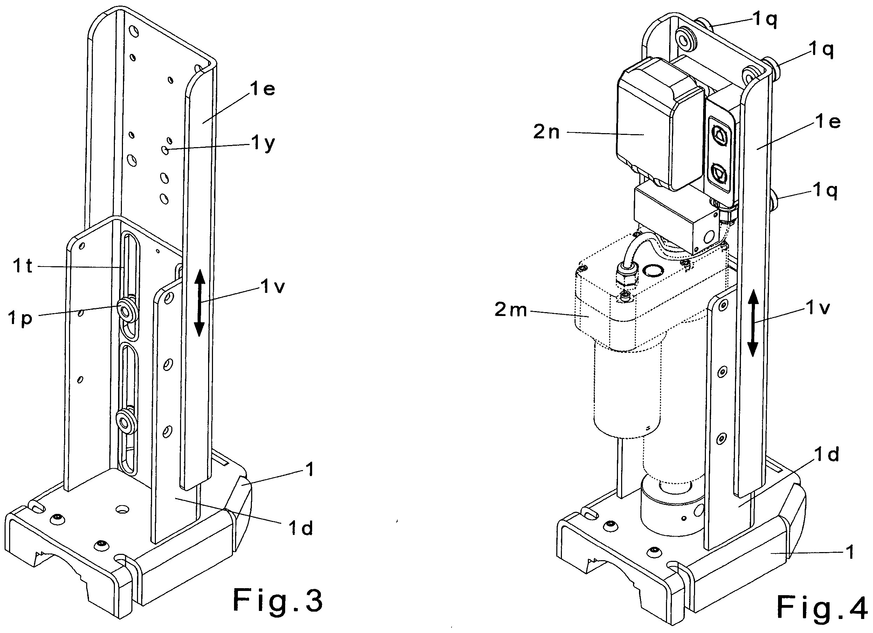

Die Fig. 3 zeigt in perspektivischer Darstellung die Auflageplatte der, in den Fig. 1 und Fig. 2 gezeigten, Hebevorrichtung ohne Befestigungsbügel, mit dem fest verbundenen Trägerelement samt dem daran verschiebbar gelagerten Trägerelement, ohne elektrischem Stellantrieb.
Die Fig. 4 zeigt in perspektivischer Darstellung die selben in Fig, 3 gezeigten Bauteile der Hebevorrichtung zusammen mit dem elektrischen Stellantrieb welche zwische dem festen und dem verschiebbaren Trägerelement wirkt und mit der entsprechenden Batterie und der elektrischen Steuerung für die Hebe-/Absenkbewegung.

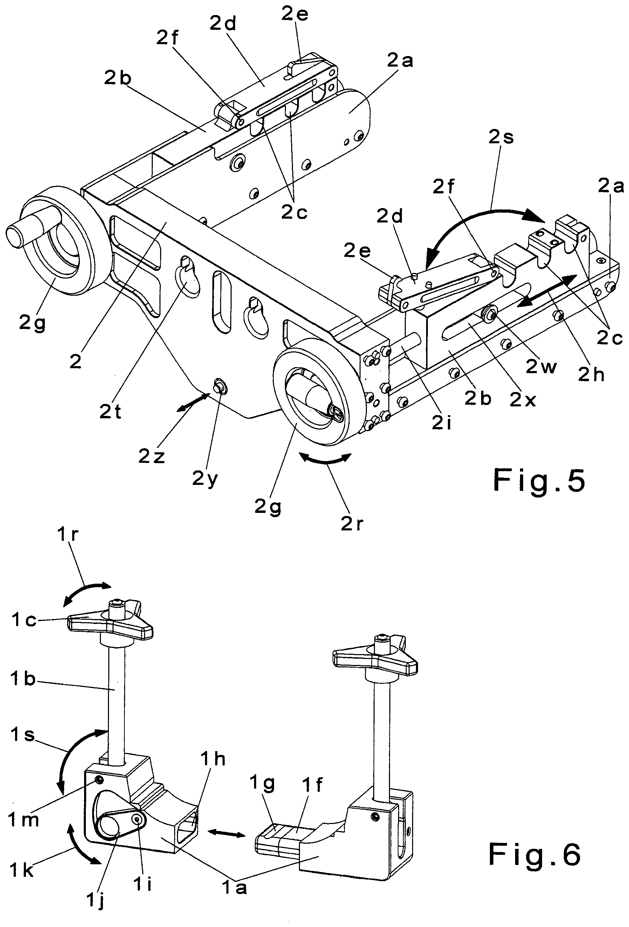

Die Fig. 5 zeigt in perspektivischer Darstellung das, am vertikalen verschiebbaren in den Fig. 1 und Fig. 2 gezeigte Trägerelement aufsteckbare, horizontale Trägerelement mit den zwei Auflagearmen, beide mit verschiebbarem Auflageelement samt Rückhalteelement.
Die Fig. 6 zeigt in perspektivischer Darstellung den Befestigungsbügel der in Fig. 1 und Fig. 2 dargestellten Hebevorrichtung in zerlegtem Zustand, zusammen mit den Gewindespannbolzen samt den entsprechenden Drehgriffen.

Die erfindungsgemäße Hebevorrichtung ist an horizontalen Stützstreben A mit rundem Rohrquerschnitt oder an Stützstreben A1 mit profiliertem Rohrquerschnitt der Trägerstruktur einer Eisenbahnoberleitung, oder an Trägern welche an der Hebebühne bekannter Eisenbahbaufahrzeuge vorgesehen sind und welche einen ähnlichen Querschintt der besagten Stützstreben aufweisen, montierbar. Die Befestigung der Hebevorrichtung erfolgt mittels einer Auflageplatte 1 welche an der Oberseite ein fest verbundenes vertikales Trägerelement 1d aufweist, während unterhalb ein zerlegbarer Befestigungsbügel anbringbar ist. Ein Teil des zerlegbaren Bügels ist mit einem Einrastvorsprung 1f mit querverlaufender Rille 1g ausgestattet, während der zweite Teil einen Einrastsitz 1h und eine, mittels einem Hebel 1j drehbare 1k Nocke 1i aufweist, in zusammengesteckter Position der beiden Teile des Bügels 1a, greift die besagte Nocke 1i, infolge Drehung 1k, in die Rille 1g am Einrastvorsprung 1f ein. Durch Betätigung 1k des Hebels 1j des Zapfens mit Nocke 1i in Gegenrichtung lässt diese den Einrastvorsprung 1f frei, was das Außernandernehmen des Bügels 1a ermöglicht. Beide Teile des zerlegbaren Bügels 1a sind mit einem Gewindespannbolzen 1b ausgestattet welcher schwenkbar 1s gelagert 1m ist und mit einem Drehgriff 1c zwecks Befestigung versehen ist. Infolge Anbringung des zusammengesteckten Befestigungsbügels 1a von unten an die Stützstrebe A, A1 entsprechend der Auflageplatte 1, können die Gewindespannbolzen 1b nach oben in die entsprechenden Kerben seitlich an der Auflageplatte 1 eingeschwenkt 1s werden; durch anschließendes Drehen 1r der Drehgriffe 1c wird die Auflageplatte 1, zusammen mit dem vertikalen festen Trägerelement 1d fest an der rohrförmigen Stützstrebe A, A1, durch Zusammenklemmen dieser zwischen Auflageplatte 1 und Befestigungsbügel 1a, befestigt.

Das vertikale feste Trägerelement 1d weist, in Längsrichtung verlaufende, vertikale Führungsschlitze 1t auf in welche die pilzförmigen Zapfen 1 eingreifen welche vom verschiebbaren Trägerelement 1e in entsprechender Position der Schlitze 1t abstehen. Die vertikale Gleitbewegung 1v des verschiebbaren Trägerelements 1e erfolgt durch einen elektrischen linearen Stellantrieb 2m welcher von einer aufladbaren Batterie 2n gespeist wird und mit einem Ende an der Auflageplatte 1a oder am vertikalen festen Trägerelement 1d befestigt ist während das zweite Ende am verschiebbaren Trägerelement 1e befestigt ist.

Das verschiebbare Trägerelement 1e ist am oberen Ende mit mindestens einem Paar pilzförmiger Zapfen 1q oder mit mehreren Paaren von Zapfen ausgestattet welche in unterschiedlicher Höhe, zwecks Anbringung eines horizontalen Trägerelements 2 welches entsprechende Aufnahmeschlitze 2t aufweist, angebracht sind. Die besagte Anbringung durch Steckverbindung zwischen dem verschiebbaren Trägerelement 1e und dem horizzontalen Trägerelement 2 ist durch einen Sperrzapfen 2y gesichert welcher in eine entspechende Bohrung 1y am verschiebbaren Trägerelement 1e eingreift. Auf den besagten Sperrzapfen wirkt axial eine Feder welche ihn in die Sperrposition, in die Bohrung 1y, schiebt 2z; zwecks Abmontage des horizontalen Trägerelements 2 vom vertikal verschiebbaren Trägerelement 1e muß der besagte Sperrzapfen 2y durch Überwindung der Kraft der entsprechenden Feder, aus der Bohrung herausgezogen 2z werden.

Das horizontale Trägerelement 2 weist an beiden Enden jeweils einen Auflagearm 2a auf an welchem, mittels Führungs- und Rückhaltezapfen 2w ein, in Längsrichtung verschiebbares 2h, Auflageelement 2b gelagert ist, welches einen Führungsschlitz 2x aufweist der vom besagten Zapfen 2w durchdrungen wird. Das verschiebbare Auflageelement 2b ist horizontal entlang dem Auflagearm 2a bewegbar indem am Handrad 2g gedreht 2r wird welches an der Gewindestange 2i befestigt ist die in einer Gewindebohrung des verschiebbaren Auflageelements 2b wirkt welches an der Oberseite Kerben 2c für die Aufnahme der Tragseile E aufweist. Die besagten Tragseile E können in den Kerben 2c mittels eines Rückhalteelements 2d gesichert werden welches am verschiebbaren Auflageelement 2b schwenkbar 2s angelenkt 2f ist und in Rückhalteposition mittels, am verschiebbaren Auflageelement 2b schwenkbar gelagerten, Einklinkelement 2e in Rückhalteposition arretierbar ist, wobei es unter Federwirkung in einen entsprechenden Sitz am verschiebbaren Auflageelement 2b, eingreift.

Zwecks Stabilisierung der vertikalen Position der, an der Stützstrebe A, A1 angebrachten, Hebevorrichtung auch in Präsenz horizontal, quer zu den anzuhebenden Tragseilen E, wirkender Kräfte, sind am oberen Ende des festen vertikalen Trägerelements 1d welches von der Auflageplatte 1 abragt, zwei Arme 2j vorgesehen deren freie Enden durch einen Zapfen 2k verbunden sind an welchem ein Ende 3a eines flexiblen Zugankers 3 anbringbar ist, dessen entgegengesetztes Ende 3b mittels Kopplungselement 3d an der Stützstrebe A, A1 befestigt und mittels Blockierschraube mit Drehgriff 3e, im erforderlichen Abstand zur Auflageplatte 1, gesichert ist. Der flexible Zuganker 3 ist mit einem Spanner 3c versehen welcher geeignet ist um die Länge des Zugankers 3 dem Abstand zwischen dem Befestigungspunkt an der Stützstrebe A, A1 und der Position des festen vertikalen Trägerelements 1d anzupassen, bzw. um die Spannung so zu regulieren, dass das vertikale feste Trägerelement 1d, durch Gegenwirkung zur eventuellen horizontalen, quer zu den, aus den Halterungselementen C am oberen Ende des Isolators B. B1, abgehobenen Tragseilen E wirkenden Kraft, immer in vertikaler Position zurückgehalten wird. Der besagte flexible Zuganker 3 kann auch durch eine starre Stütze mit Spannvorrichtung, z.B. Gewindespanner, ersetzt werden um den horizontalen Kräfte in beide Richtungen, quer zu den Tragseilen E, entgegenwirken zu können.

Die Auflageplatte 1, samt dem zerlegbaren Befestigungsbügel 1a, ist in einem geeigneten Abstand zu den Isolatoren B, B1 an den unterschiedlichen Stützstreben A, A1 der Trägerstruktur der Eisenbahnoberleitung oder an Auflagen welche an den Hebebühnen der bekannten Eisenbahnbaufahrzeuge vorgesehen oder anbringbar sind, montierbar. Die vertikale Position des festen Trägerelements 1d welches von der Auflageplatte 1 abragt ist durch einen flexiblen Zuganker 3 mit Spanner 3c gesichert welcher mit einem Ende 3a an einem, beide freien Enden zweier im oberen Bereich des festen vertikalen Trägerelements 1d abstehender Arme 2j, verbindenden, Zapfen 2k befestigt ist, während das entgegengesetzte Ende 3b des Zugankers 3, in einem geeigneten Abstand von der Auflageplatte 1, an der selben Stützstrebe A, A1 befestigbar ist. Dieser flexible Zuganker 3 ist durch eine starre Stütze mit Spanner ersetzbar um nicht nur Zugkräften sondern auch Schubkräften entgegenzuwirken können. Das horizontale Trägerelement 2 samt den beiden Auflagearmen 2a ist in mehreren, unter sich vertikal beabstandeten, Positionen am verschiebbaren Trägerelement 1e aufsteckbar welches vertikal, händisch, z.B. durch eine Gewindestange, durch Zahnrad mit Zahnstange oder mittels linearem elektrischem oder hydraulischem Stellantrieb 2m welcher zwischen der Auflageplatte 1 oder dem festen vertikalen Trägerelement 1d und dem verschiebbaren Trägerelement 1e wirkt, betätigbar ist. Infolge der Positionierung der Auflagearme 2a unterhalb der Tragseile E zwecks Anheben 1v des verschiebbaren Trägerelements 1e, können die entsprechenden verschiebbaren Auflageelemente 2b samt den Rückhalteelementen 2d in aufgeschwenkter Stellung, entlang der Auflagearme 2a, durch Drehen 2r an den Handrädern 2g der Gewindestangen 2i, welche auf die verschiebbaren Auflageelemente 2b wirken, bewegt 2h werden um die Kerben 2c in die entsprechende Position zu den darüber angeordneten Tragseilen E zu bringen. Anschließend können das verschiebbare Trägerelement 1e zusammen mit dem horizontalen Auflageelement 2 und den Auflagearmen 2a weiter angehoben 1v werden bis die Tragseile E in den Kerben 2c der verschiebbaren Auflageelemente 2b liegen wo deren Rückhalteposition, durch Zuschwenken 2s der Rückhalteelemente 2d mittels der entsprechenden Einklinkelemente 2e gesichert wird. Insbesondere im Fall horizontaler Kräfte welche quer zu den Tragseilen E wirken, wie z.B. im Bereich von Kurvenabschnitten der Bahnstrecke, muss die vertikale Position der Hebevorrichtung durch Anbringung eines, an der selben Stützstrebe A, A1, von der Auflageplatte 1 beabstandet befestigbaren Zugankers 3 oder einer Stütze, stabilisiert werden. Infolge der besagten Handlungen können die Tragseile E in Sicherheit durch Demontage der an den, am oberen Ende des Isolators B, B1 vorgesehenen Halteklemmen D der Halterungselemente C, befreit werden. die Tragseile E können anschließend angehoben 1v werden um sie vertikal vom Halterungselement C zu distanzieren und so alle Montage-, Austausch- oder Wartungsarbeiten am Isolator B. B1 und/oder an den mit diesem verbundenen Teilen, durchführen zu können. Zwecks Wiederpositionierung und Befestigung der Tragseile E auf den Halterungselementen C, müssen die vorgenannten Arbeitsschritte in umgekehrter Reihenfolge durchgeführt werden. Natürlich ist es, während der Durchführung der vorgenannten Arbeitsschritte, möglich die Wirkung des Zugankers 3 oder der eventuellen Stütze anzupassen indem die entsprechende Spannvorrichtung 3c betätigt wird und eventuell die, in den Kerben 2c an den gleitenden Auflageelementen 2b gehaltenen und gesicherten, Tragseile E durch Drehen 2r der Handräder 2g in Querrichtung zu verschieben 2h.

## Patentansprüche

1. Hebevorrichtung für die Durchführung non Eingriffen an Eisenbahnoberleitungen bestehend aus einer Auflageplatte (1) mit vertikalem festen Trägerelement (1d) welche an einer Stützstrebe (A, A1) der Trägerstruktur einer Eisenbahnoberleitung oder an einem horizontalen rohrförmigen Träger an der festen oder anhebbaren Arbeitsplattform eines Eisenbahnbaufahrzeuges befestigbar ist, **dadurch gekennzeichnet, dass** am besagten festen Trägerelement (1d) ein vertikal verschiebbares (1v) Trägerelement (1e) geführt ist welches am oberen Ende ein horizontales Trägerelement (2) trägt, von dessen Enden zwei horizontale Auflagearme (2a) im rechten Winkel abstehen, dass das besagte verschiebbare Trägerelement (1e) händisch mittels Gewindestangen- oder Zahnrad mit Zahnstange oder mittels elektrischem oder hydraulischem linearem Stellmechanismus (2m) bewegbar ist und dass an jedem der genannten Auflagearme (2a) ein längsverschiebbares (2h) gleitendes, durch Gewindestange (2i) mit Handrad (2g) oder Einstelldrehgriff betätigbares, Auflageelement (2b) gelagert ist.

2. Hebevorrichtung gemäß Anspruch 1 **dadurch gekennzeichnet, dass** die Auflageplatte (1) mittels eines Bügels (1a), welcher an beiden Enden mit zwei schwenkbar (1s) angebrachten Gewindespannbolzen (1b) mit Drehgriffen (1c) ausgestattet ist, an den Stützstreben (A, A1), bzw. an horizontalen rohrförmigen Trägern, befestigbar ist und dass der besagte Bügel (1a) aus einem einzigen Stück besteht oder von der zerlegbaren Art ist und aus zwei zusammensteckbaren, in zusammengestecktem Zustand arretierbaren, Teilen besteht.

3. Hebevorrichtung gemäß Anspruch 1, **dadurch gekennzeichnet, dass** das vertikale verschiebbare Trägerelement (1e) mittels pilzförmiger Zapfen (1p) in entsprechenden vertikalen Schlitzen (1t) am vertikalen fixen Trägerelement (1d) oder mittels Vorsprünge welche in entsprechenden vertikalen Führungen oder Rillen gleiten, gefüht ist.

4. Hebevorrichtung gemäß Anspruch 1, **dadurch gekennzeichnet, dass** das horizontale Trägerelement (2) am oberen Ende des vertikal verschiebbaren Trägerelements (1e) befestigt ist.

5. Hebevorrichtung gemäß Anspruch 1, **dadurch gekennzeichnet, dass** das horizontale Trägerelement (2) im oberen Bereich des vertikal verschiebbaren Trägerelements (1e) in einer einzigen Position oder in mehreren voneinander beabstandeten Positionen ansteckbar ist und in den besagten Positionen durch einen Sperrzapfen (2y) oder einem am horizontalen Trägerelement (2) vorgesehenen Einrastelement welches unter Federwirkung in einer Bohrung (1y) oder in einem entsprechenden Sitz am vertikalen verschiebbaren Trägerelement gesichert ist.

6. Hebevorrichtung gemäß Anspruch 1, **dadurch gekennzeichnet, dass** die Auflagearme (2a) selbst an der Oberseite mindestens eine oder zwei Kerben aufweisen welche einen geeigneten Querschnitt aufweisen um das abzuhebende Tragseil oder die Tragseile (E), infolge Demontage der am Halterungselement (C) für die besagten Tragseile (E) vorgesehenen Halteklemmen (D), aufzunehmen.

7. Hebevorrichtung gemäß Anspruch 1, **dadurch gekennzeichnet, dass** beide Auflagearme (2a) mit einem gleitenden Auflageelement (2b) versehen sind welches entlang der Längserstreckung mittels Gewindestange (2i) mit Handrad (2g) verstellbar (2h) ist, am entsprechenden Auflagearm (2b) mittels einem Führungszapfen (2w) welcher einen, am verschiebbaren Auflageelement vorgesehenen, Führungsschlitz (2x) durchdringt, gelagert ist oder welches in entsprechenden, am Auflagearm (2a) vorgesehenen Gleitführungen gelagert ist, dass das vorgenannte verschiebbare Auflageelement (2b) nach oben offene Kerben (2c) für die Aufnahme des abzuhebenden Tragseils oder der Tragseile (E) aufweist, dass die genannten Tragseile (E) in den besagten Aufnahmekerben (2c) mittels, am verschiebbaren Auflageelement (2b) schwenkbar (2s) gelagerten (2f) oder mittels am besagten verschiebbaren Auflageelement längsverschiebbar gelagerten, Rückhalteelement (2d) sicherbar ist und dass das besagte Rückhalteelement (2d) in Rückhaltestellung mittels Einklinkelement (2e) oder Sperre arretierbar ist.

8. Hebevorrichtung gemäß Anspruch 1, **dadurch gekennzeichnet, dass** die verschiebbaren Auflageelemente (2b), längs der entsprechenden Auflagearme (2a) mittels Zahnstangenmechanismus verfahrbar (2h) sind.

9. Hebevorrichtung gemäß Anspruch 1, **dadurch gekennzeichnet, dass** das vertikale feste Trägerelement (1d) im hinteren oberen Bereich einen oder zwei Arme (2j) aufweist welche an ihren freien Enden durch einen Zapfen (2k) verbunden sind an welchen ein Ende (3a) eines flexiblen Zugankers (3) oder einer starren Stütze befestigt ist während das zweite Ende (3b) direkt oder mittels Kopplungselement (3d) mit Fixierschraube (3e), beabstandet vom, das Tragseil oder die Tragseile (E) stützenden, Isolator (B, B1) an der selben Stützstrebe (A, A1) befestigt ist an welcher die Auflageplatte (1) mit dem festen vertikalen Trägerelement (1d) befestigt ist.

10. Hebevorrichtung gemäß Anspruch 1, **dadurch gekennzeichnet, dass** sei es der Zuganker (3), als auch die starre Stütze mit einem bekannten Spanner ausgestattet sind welcher im ersten Fall ein Aufwickelspanner und im zweiten Fall ein Gewindestangenspanner ist.
